# EUROPEAN PATENT SPECIFICATION

(11) **EP 1 125 818 B1**
(45) Date of publication and mention of the grant of the patent: **17.03.2004**
(21) Application number: 00311383.4
(22) Date of filing: 19.12.2000
(51) Int. Cl.: B62B 5/00

(54) **A mobile platform assembly**
Mobile Plattform
Plate-forme mobile

(30) Priority: 11.02.2000 GB 0003211
(43) Date of publication of application: 22.08.2001
(73) Proprietor: LIN PAC MOULDINGS LIMITED, Birmingham B37 7YN (GB)
(72) Inventor: Bebb, Richard Hodson, Wilmslow, Cheshire SK9 2BL (GB)
(74) Representative: Green, Mark Charles

(56) References cited:
- EP-A- 0 807 542
- DE-A- 19 703 545
- GB-A- 2 263 684
- GB-A- 2 280 166

## Description

### TECHNICAL FIELD AND BACKGROUND ART

The present invention relates to mobile platform assemblies and is primarily concerned with such assemblies having load carrying decks and which are capable of having their platforms connected or ganged together to permit the formation of a range of deck sizes whilst the connected platform assemblies present unified mobility.

Mobile platforms, whose mobility is provided by ground engaging wheels, balls or other rollers, are well known where several such platforms can be connected together in side-by-side relationship for unified mobility and the overall deck area is the multiple of the individual deck areas of the platforms in the unified assembly. It is usual for the decks of mobile platform assemblies to be of a standard or modular size which, typically, corresponds to the size of a modular container or box (or a multiple of such modular containers) that is likely to be carried on the deck. Consequently when the platform assemblies are connected together in side-by-side relationship, a multiple of the modular deck area is provided as convenient for unified mobility and storage of the two or more platform assemblies (typically carrying modular containers according to the multiple modular size presented by the decks of the connected platform assemblies). When required, the platform assemblies may be used as individual units, in conventional manner, disconnected from other platform assemblies.

An example of a mobile platform assembly of the kind discussed above is the subject of our UK Patent GB-2,280,166A where the platform is provided with longitudinally extending channels and flanges that are laterally spaced on its opposed side edges so that two similar platform assemblies, in side-by-side relationship, can be connected together by the flange on the side edge of one platform can longitudinally engage in the channel on a side edge of the second adjacent platform for the two platforms to be held together to exhibit unified mobility by the aforementioned interengagement. This arrangement provides the advantage that several similar platform assemblies can be connected together in side-by-side relationship to provide an aggregate deck size which is a multiple of the modular or standard deck size of each individual platform. However, there is a disadvantage that when several of the similar platform assemblies are positioned in a side-by-side and abutting relationship and are disconnected from each other, the overall area occupied by the multiple decks can be appreciably or significantly greater than the aggregate deck area presented by the interconnected platform assemblies. This increase in area presented by the individual decks of the unconnected platform assemblies is caused by the space occupied within the area by abutment between the flanges at the side edges of adjacent platforms. The increase in area as aforementioned can be both inconvenient and expensive as a result of the increased space that will be required during storage or transportation of several unconnected platform assemblies. It is an object of the present invention to provide a platform assembly of the kind generally discussed and which alleviates the above mentioned disadvantage.

### STATEMENT OF INVENTION AND ADVANTAGES

According to the present invention, there is provided a mobile platform assembly as defined in claim 1.

The platform assembly of the present invention has the advantage that when it is to be used or stored as a unit independent of other assemblies, a connecting means at a longitudinal side edge of the platform can be adjusted to a position within, or adjacent to, the side edge of the platform so that it is substantially unobtrusive at that side edge. Consequently when two or more of the similar platform assemblies are arranged in side-by-side and abutting relationship without being connected one to another, the overall area presented by the platform assemblies may correspond, with reasonable tolerance, to the aggregate deck area of the assemblies so that little, if any space in the overall area is occupied by the connecting means at the sides of the respective platform assemblies. When the platform assemblies are required to be connected together for unified mobility, a connecting means at a longitudinally extending side edge of a platform may be displaced or withdrawn relative to the platform to the second position where it is presented for connection to the connecting means at the side edge of a second similar mobile platform.

Usually the platform will have its deck horizontal. The connecting means will usually be located on substantially parallel and longitudinally extending opposed side edges of the platform, typically with a platform that is rectangular in plan.

The void of the first connecting means will usually be presented by a downwardly open channel at least partly defined by the downwardly directed flange means. The void of the second connecting means will usually be presented by an upwardly open channel at least partly defined by the upwardly directed flange means.

One or both voids may be partly defined by the platform.

It is possible for the platform assembly of the present invention to have the connecting means at both of the longitudinally extending side edges laterally displaceable relative to the platform between the first and second positions. Preferably, however, one of the connecting means is rigid or integral with the platform with the flange means and void of that connecting means unobtrusively disposed in the respective side edge of the platform. This latter arrangement is particularly convenient where the platform is moulded in plastics.

The (or each) laterally displaceable connecting means is preferably in the form of a connecting member having the flange means and which member is carried by the platform to be displaceable selectively to either the first position in which the flange means is unobtrusive on the platform or the second position in which the flange means is presented for connection to the connecting means of an adjacent platform. Usually the previously mentioned channel of the respective connecting means will be formed in the connecting member.

Stop means may be provided to interengage between the connecting member and the platform for locating the connecting member in its second position. Frictional engagement or resilient interference may be provided between the connecting member and the platform to releasably retain the connecting member in its first position.

The connecting member is preferably hingedly mounted on the platform to be pivotably adjustable between its first and second positions. In an alternative arrangement, the connecting member may be in the form of a drawer component which is mounted on tracks to be slidable laterally into and out of the respective side edge of the platform.

The laterally displaceable connecting means may be biassed into its first position so that it has to be displaced against such biassing to adopt its second position. This arrangement ensures that when the platform assembly is unconnected from another assembly, its connecting means will automatically adopt the first position. The biassing of the connecting means will typically be a spring or resilient loading of that means, such as a plastics spring which reacts between the platform and the aforementioned connecting member.

Preferably the platform of the assembly has means for displacing the connecting means in a direction (possibly against its biassing) to locate the connecting means in its second position as required for connecting or ganging together two similar platform assemblies. The displacement means preferably acts automatically to displace the connecting means from its first position to its second position as two similar platform assemblies are manoeuvred and displaced relative to each other to be connected together by the interengaging connecting means. The displacement means may comprise guide surfaces on the platform which are arranged so that as two platforms slide longitudinally into side-by-side relationship, guide surfaces cooperate between the two platforms and with the connecting means which is to connect between the two platforms to cause the connecting means to be displaced laterally from its first position to its second position in readiness to connect the two platforms together during continued longitudinal displacement between them. It is to be realised that the automatic displacement as aforementioned may be provided irrespective of whether or not the laterally displaceable connecting means is biassed to automatically adopt its first position.

Following connection of two platform assemblies in side-by-side relationship, with the flange means at one longitudinally extending side edge of one assembly being engaged longitudinally with the void (preferably channel) at the longitudinally extending side edge of the second assembly, the two assemblies may be secured in engagement for unified mobility by releasable retaining means such as a latch carried by the platform. During longitudinal sliding engagement between two similar platform assemblies, the latch may cooperate between the assemblies to restrain them from relative longitudinal displacement in a sense to become unconnected.

### DRAWINGS

One embodiment of a mobile platform assembly constructed in accordance with the present invention will now be described, by way of example only, with reference to the accompanying illustrative drawings in which:-
Figure 1 is a perspective view of the assembly in part section, showing first connecting means provided at a longitudinally extending side edge of an injection moulded platform;
Figure 2 is a further perspective view of the assembly, in part section, showing the second connecting means provided at a further longitudinally extending side edge of the platform;
Figure 3 shows a lateral part section through the connecting means of two platforms as shown in Figure 1 connected together for unified mobility;
Figure 4 shows a similar part section to that of Figure 3 with the connecting means disengaged and adjusted to an unobtrusive position for the side edges of the two platforms to move into abutment;
Figures 5 and 6 are similar part sections to Figures 3 and 4 respectively and show a modified form of connecting means with a blow moulded platform;
Figure 7 is a perspective view of part of the assembly in Figure 1 showing a modification for automatic displacement of the connecting means to its second position when effecting a connection;
Figure 8 is a further perspective view of part of the modified assembly in Figure 7, and
Figure 9 is a plan view of two of the assemblies shown in Figures 7 and 8 and illustrates a technique for manoeuvring the assemblies into side-by-side connected relationship.

### DETAILED DESCRIPTION OF DRAWINGS

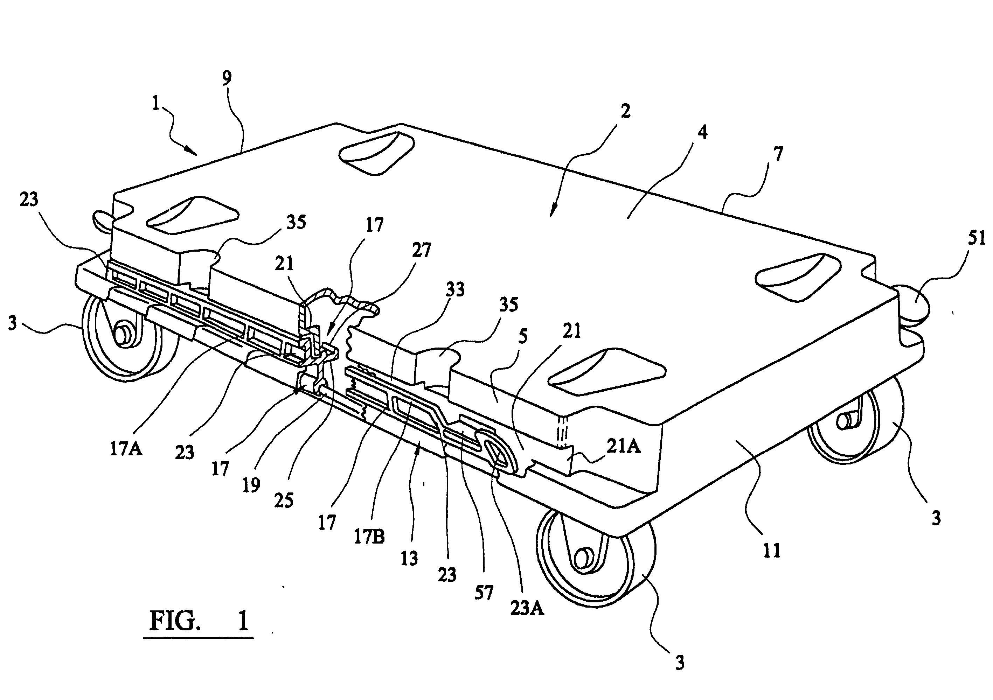

In the embodiment shown in Figures 1 to 4, the mobile platform assembly is in the form of a roll pallet (1) having a generally oblong rectangular platform (2) formed as a plastics injection moulding which is carried on four ground engaging castored wheels that are attached to the underside of the platform. The platform (2) has a flat horizontal deck (4), a pair of longitudinally extending, laterally spaced and parallel side edges (5 and 7) and a pair of laterally extending, longitudinally spaced and parallel end edges (9 and 11).

Provided at the side edge (5) of the platform (2) and extending longitudinally thereof is a connecting means (13) and provided at the side edge (7) and extending longitudinally thereof is a further connecting means (15).

The connecting means (13) includes an elongated connecting member (17) which extends longitudinally over the major part length of the side edge (5) and is hingedly mounted on the platform (2) by a horizontal pivot pin (19) that extends longitudinally parallel to the side edge (5). The connecting member (17) is mounted by the pin (19) to be capable of pivotal movement towards and from the side edge (5) between a first position in which the connecting member is accommodated unobtrusively within a longitudinally extending recess (21) in a wall 21A of the side edge 5 of the platform and a second position in which the connecting member is displaced outwardly of the recess (21) to stand proud of the side edge (5) and be presented for connecting or ganging together the wheeled pallet (1) with a second similar wheeled pallet in side-by-side relationship as will be described hereinafter.

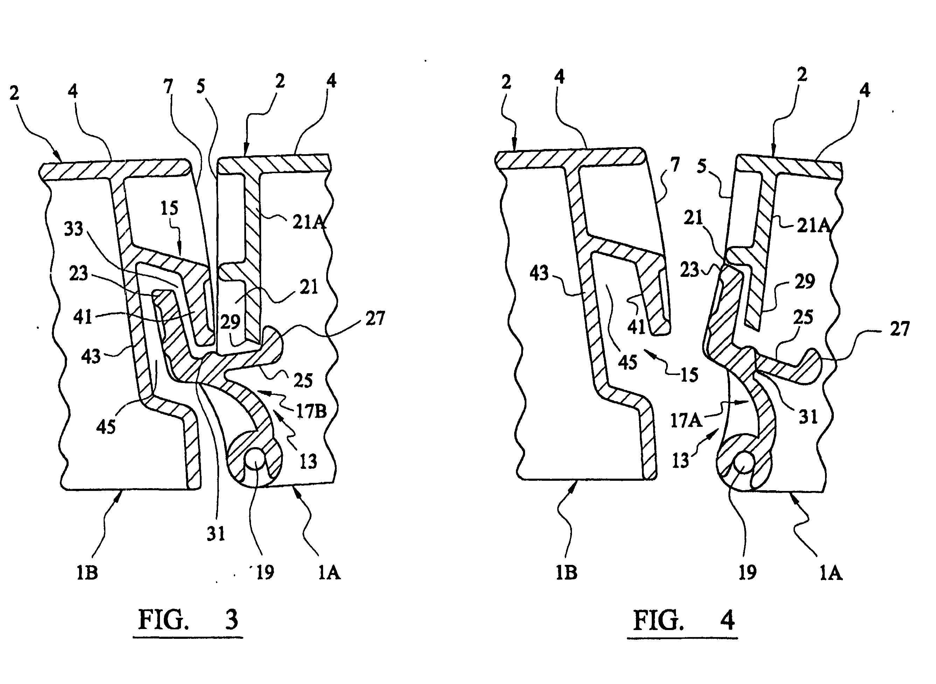

For convenience of illustration, in Figure 1 the connecting member (17) is shown with part length (17A) thereof in its first position and part length (17B) thereof in its second position. The aforementioned first position for the connecting member (17A) is also shown in Figure 4 and the aforementioned second position for the connecting member (17B) is also shown in Figure 3.

The connecting member (17) has a longitudinally extending upstanding flange (23) which in the first position (17A) (see Figure 4) of the connecting member sits unobtrusively within the recess (21) in the side edge (5). The platform (2) is, predominantly, a hollow injection moulding and provided on the connecting member (17) is a leg (25) which extends laterally relative to the flange (23) and inwardly of the platform (2). Provided at the free end of the leg (25) is an upstanding foot (27). The leg (25) of the connecting member projects into the platform (2) beneath a bottom end part (29 of the side edge (21A). The first position of adjustment (17A) for the connecting member (see Figure 4) is determined when the flange (23) abuts the side edge wall (21A) within the recess (21). It can be seen from Figures 3 and 4 that the leg (25) has a stud, rib or other small projection (31) upstanding between the flange (23) and the foot (27). As the connecting member is pivoted into its first position (17A), the projection (31) abuts and slide or snaps beneath the end part (29) of the side edge wall (21A) as permitted by resilient interference between the plastics material of the leg (25) and of side wall part (29). When the connecting member (17) is in its first position (17A), it is releasably retained in that position by abutment of the side edge end part (29) between the flange (23) and the projection (31).

As the connecting member (17) is pivotally displaced laterally outwardly of the platform (2) by rotation about the pin (19) from the first position (17A) towards the second position 178, the projection (31) abuts the side edge part (29) so that the plastics material deforms sufficiently for the projection (31) to slide or snap beneath the part (29). Following this the connecting member can pivot to its second position (17B) which is determined, as will be seen from Figure 3, when its foot (27) abuts or stops against the bottom part (29) of the side edge wall (21A). With the connecting member in its second position(17B), the upwardly directed flange (23) defines partly with the side edge wall (21A) within the recess (21) an upwardly open channel (33) which extends longitudinally over the major part length of the side edge (5).

Lateral adjustment of the connecting member (17) to optionally select between its first position (17A) and its second position (17B) may be carried out by manual handling of the connecting member to simply pivot it about the pin (19). Cut-outs (35) are moulded into the platform (2) at the side edge (5) to permit convenient access for manual engagement with the connecting member when it is in its first position (17A).

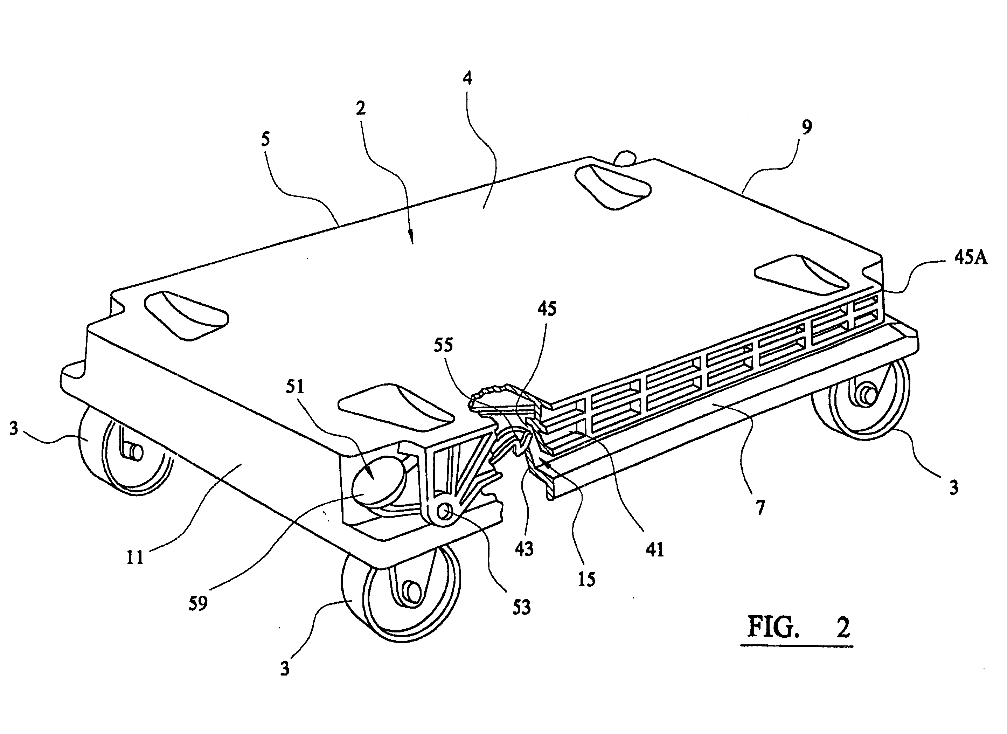

The connecting means (15) provided at the side edge (7) is located unobtrusively within the wall of that side edge and is moulded integral with the platform (2). More particularly, the connecting means (15) has a downwardly directed flange (41) which extends longitudinally over the major part length of the side edge (7). The flange (41) defines with an inner wall part (43) of the side edge (5) a downwardly open channel (45), the length of which corresponds to that of the flange (41) and which channel opens at (45A) (Figure 2) into the end edge (9).

The connecting means (13 and 15) provided on the platform (2) permits two or more similar wheeled pallets (1) to be connected or ganged together in side-by-side relationship for unified mobility. For such connection of two wheeled pallets (1A and 1B) (which are identical to the pallet (1)), the connecting member (17) of the pallet (1A) is displaced laterally outwardly of its platform to its second position (17B). A leading edge (23A) (see Figure 1) of the flange (23) is now positioned within the end opening (45A) of the downwardly open channel (45) in the end edge (9) of the pallet (1B) by appropriate manoeuvring of the two pallets (1A and 1B). The pallets (1A and 1B) are now displaced longitudinally and in parallel relationship relative to each other so that the upwardly directed flange (23) of the pallet (1A) is received within, and slides longitudinally along, the downwardly open channel (45) of the pallet (1B) whilst the downwardly directed flange (41) of the pallet (1B) is received longitudinally within the upwardly open channel (33) presented at the side edge (5) of the wheeled pallet (1A) (see Figure 3). The flanges as aforementioned slide along the respective channels as the platforms (2) of the pallets (1A and 1B) move into side-by-side and connected or ganged together relationship which may be determined when the leading end (23A) of the flange (23) on the pallet (1A) abuts a convenient stop (not shown) at the end of the channel (45) remote from its end (45A) on the pallet (1B). It will be seen from Figure 1 that the leading end (23A) of the connecting member is tapered or rounded to present a lead in profile for convenience of engaging with the open end (45A) of the channel (45).

For convenience of illustration and description, considerable clearance has been shown between the flanges and the channels within which they are respectively received for the connected wheeled pallets (1A and 1B) in Figure 3 - in practice it is likely that there will be less clearance to alleviate relative movement laterally between the two pallets during their unified wheeled displacement.

Similarly to the arrangement in our UK Patent Specification GB-2,280,166A, the wheeled pallet (1) has a retaining means in the form of a latch (51) (see Figure 2) to prevent relative longitudinal displacement between the wheeled pallets (1A and 1B) when they are connected together. The latch (51) is mounted by a pivot pin (53) on the side edge (7) longitudinally remote from the channel open end (45A) and has a nose (55). Located in the connecting member (17) adjacent to its leading end (23A) is a rebate (57). The latch and connecting member are arranged so that as the flange (23) of wheeled pallet (1A) is displaced along the channel (45) of the pallet (1B) the leading end (23A) of the flange (23) rides beneath the nose (55) of the latch (51) and thereafter the nose (55) drops into the rebate (57) in the flange (23) thereby securing the wheel pallets (1A and 1B) against longitudinal displacement relative to each other. The nose end (55) of the latch is weighted to be biassed for rotation about the pivot pin (53) in a sense to engage with the rebate (57). A pedal end (59) of the latch (51) can be displaced by an operative to lift the nose (55) from the rebate (57) and thereby release the latch of pallet (1B) from the flange (23) of pallet (1A) to permit the two pallets to be slidably displaced longitudinally relative to each other for their disconnection.

It will be appreciated from Figure 3 that when the wheeled pallets (1A and 1B) are connected in side-by-side relationship, the side edge (5) of pallet (1A) may abut the side edge (7) of pallet (1B). As a consequence, the decks (4) of the adjacent platforms may be in close side-by-side, possibly abutting, relationship and the overall or aggregate area presented by the two or more decks of interconnected pallets may correspond, in substance, to a multiple area of the individual pallet decks (4). This is particularly convenient where the pallet deck (4) is of a standard or modular size and the connected or ganged together pallets present a unified deck which is a multiple of the modular size.

Often the wheeled pallets will be used as individual units and retained as such even though they may be parked with their platforms disposed in side-by-side relationship, possibly for storage or vehicular transportation. With such independent wheeled pallets, the connecting members (17) can be displaced inwardly of their respective platforms to the unobtrusive first position (17A) (see Figure 4). As a consequence of this latter adjustment, the independent wheeled pallets (1A and 1B) may be manoeuvred and parked in side-by-side relationship with the side edge (5) of pallet (1A) in abutment with side edge (7) of pallet (1B). With this latter arrangement, and unlike the roller pallet discussed in our GB 2,280,166A, no spacing is required between the side edges (5 and 7) or the adjacent platform decks (4) to accommodate the connecting means which is provided on those side edges. The independent wheeled pallets may therefore be parked for storage or transportation in side-by-side relationship to occupy the same area as when the wheeled pallets are connected or ganged together in side-by-side relationship.

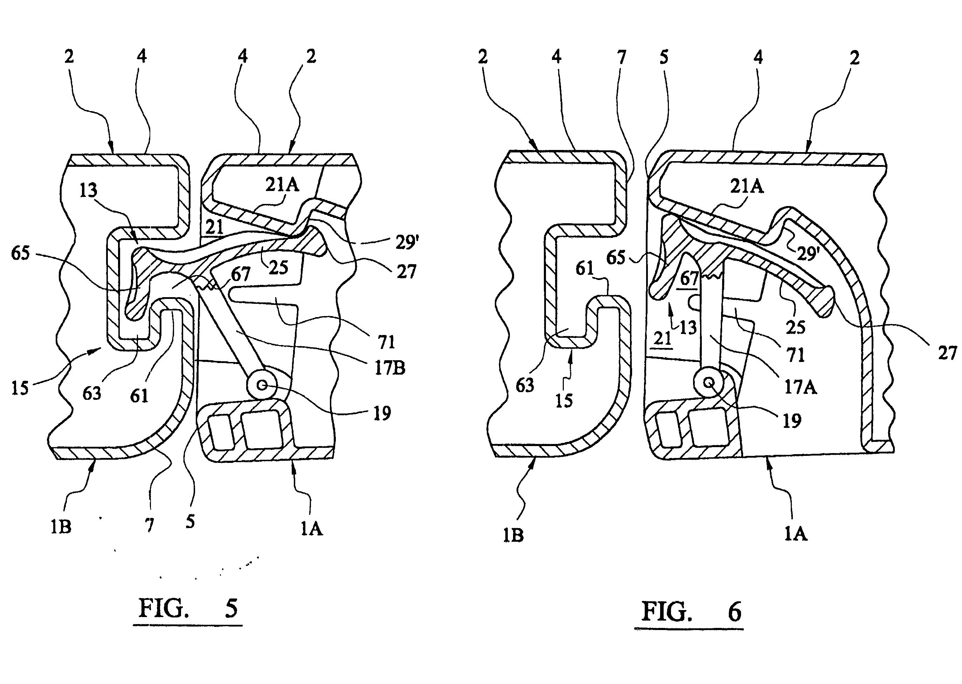

In the modification shown in Figures 5 and 6 (where similar parts or components to those referred to earlier have been accorded the same references), the platform (2) is hollow and of a plastics blow moulded or rotationally moulded structure. The connecting means (15) in the longitudinally extending side edge (7) is again moulded integrally with the platform and is unobtrusive in that side edge comprising an upwardly directed longitudinal flange (61) which partly defines an upwardly open channel (63). The connecting means (13) in the longitudinally extending side edge (5) again comprises a connecting member (17) which is hingedly mounted by a pin (19) on the platform (2) for pivotal movement between the first position (17A) where the connecting member is withdrawn or located within the platform to be unobtrusive at its side edge (5) and the second position (17B) (Figure 5) where the connecting member is presented for connection to the side edge (7) of an adjacent similar pallet. In this modification the connecting member (17) has a downwardly directed flange (65) and wholly defines, partly with the flange (55), a longitudinally extending downwardly open channel (67). With the connecting member in its second position (17B) as shown in Figure 5 and as determined by abutment of the foot (27) against an internal shoulder (291) of the platform side wall(21A), the wheeled pallets (1A and 1B) are connected or ganged together by locating the flange (65) of pallet (1A) within and sliding it along the channel (63) of pallet (1B) whilst the flange (61) is simultaneously located within and slidably displaced along the downwardly open channel (67). If the modified pallet is to be used independently, the connecting member may be withdrawn to its unobtrusive position (17A) in the side edge (5) as shown in Figure 6. The connecting member may be releasably retained in this latter position by its frictional engagement with a rib (71) on the platform (2) over which rib the connecting member (17) may slide to progressively increase its frictional retention as the connecting member is displaced progressively into the platform (2).

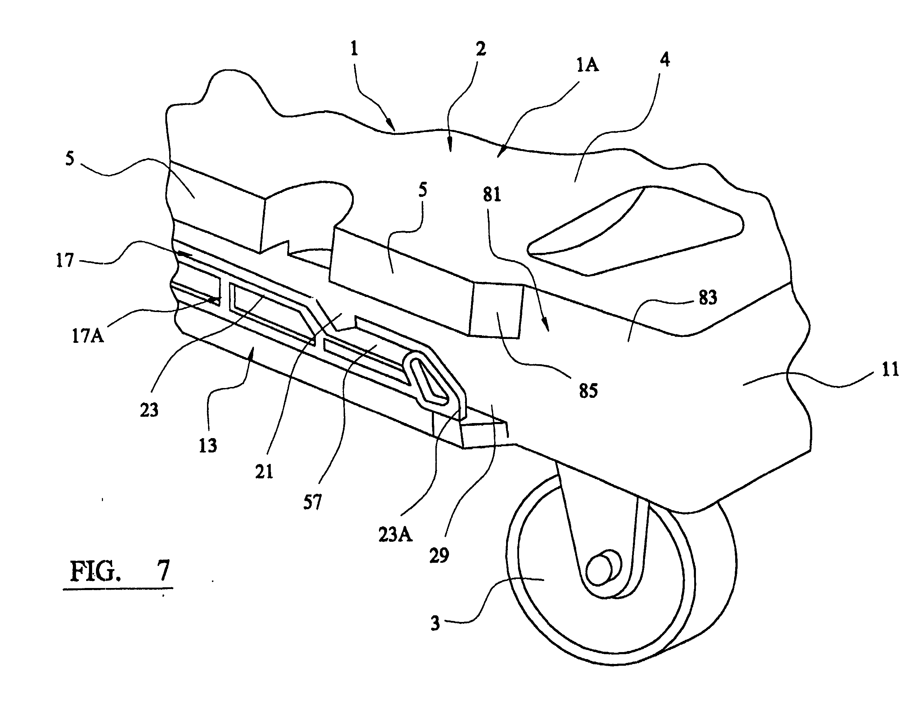

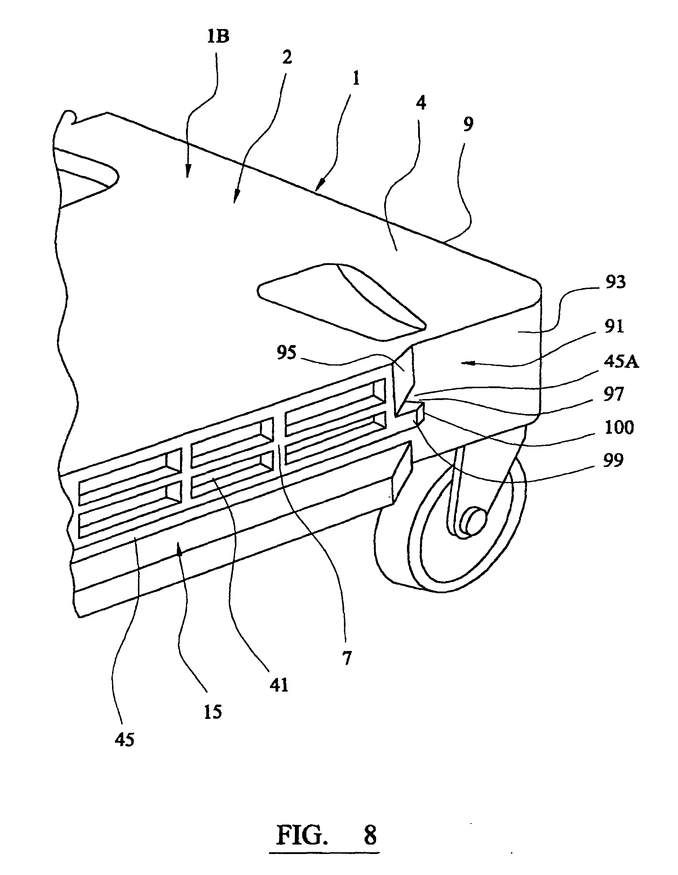

Figures 7 and 8 show a modification for the roll pallet of Figures 1 to 4 by which the connecting member (17) is automatically displaced from its first position (17A) to its second position (17B) as the roll pallet (1A) is in the process of being connected to the roll pallet (1B). This automatic displacement of the connecting member (17) is effected by the provision of guide surfaces at the side edges (5 and 7). These guide surfaces interact with each other and with the connecting member during manoeuvring of the pallets (1A and 1B) longitudinally relative to each other to cause the connecting member of the pallet (1A) to "flip" over from its first position into longitudinal alignment with the open end (45A) of the downwardly open channel (45) of the pallet (1B).

More particularly, in Figure 7 the guide surfaces at the side edge (5) are provided in a rebate (81) of that side edge adjacent to the leading end (23A) of the connecting member and the end edge (11) of the platform (2); these guide surfaces are a flat face (83) which extends from the side wall (21), is stepped back from the side edge face (5) and is parallel therewith, and a ramp face (85) which extends at an acute angle between the side edge face (5) and the face (83). In Figure 8 the guide surfaces at the side edge (7) are provided in a rebate (91) of that side edge adjacent to the end opening (45A) of the downwardly open channel (45) and the end edge (9) of the platform (2); these guide surfaces are a flat face (93) which is stepped back from the side edge face (7) and is parallel therewith, a ramp face (95) which extends at an acute angle between the side edge (7) and the face (93) and a lead-in face (97) that is located on a nose (99) which projects longitudinally from the downwardly directed flange (41) adjacent to the end opening (45A) of the channel (45). The lead-in face (97) extends at an acute angle relative to the longitudinal extent of the nose (99) to provide the latter with an apical leading edge (100).

When two roll pallets having the modifications shown in Figures 7 and 8 are to be connected or ganged together in side-by-side relationship as shown in Figure 3 (for pallets 1A and 1B) and the pallet (1A) has its connecting member in the first position (17A) (as shown in Figure 4), the two pallets (1A and 1B) are manoeuvred to bring their side edges into parallel side-by-side relationship with their decks (4) in echelon and so that the nose (99) on the side edge face (7) of the pallet (1B) is in face to face abutment, or substantially so, with the face (83) of the pallet (1A). With the nose (99) and face (83) in adjacent relationship as aforementioned, the pallet (1B) is displaced longitudinally relative to the pallet (1A) for leading edge (100) of the nose (99) of pallet (1B) to approach and enter between the connecting member (17A) and the side wall (21) of pallet (1A). With continued longitudinal displacement between the two pallets (1A and 1B), the leading edge (100) of the nose (99) of pallet (1B) enters as a wedge between the flange (23) of the connecting member (in its position 17A) of pallet (1B) and the bottom part (29) of the side wall (21A) of that pallet. Still further longitudinal displacement between the pallets (1A and 1B) causes the ramp face (85) of pallet (1A) to move into abutment (possibly face-to-face abutment) with the ramp face (95) of pallet (1B). The ramp faces act as cam surfaces, relative movement between which causes the two pallets (1A and 1B) to be displaced laterally in a direction away from each other during relative longitudinal displacement between them. Lateral displacement between the two pallets continues until the side edge face (7) and its nose extension (99) of pallet (1B) slide longitudinally over and in face-to-face abutment with the side edge face (5) of pallet (1A). During the aforementioned lateral and longitudinal displacement between the pallets (1A and 1B), the engagement of the leading face (97) on the nose (99) of pallet (1B) with the leading end (23A) of the connecting member (17) of pallet (1A) causes the connecting member (17) to "flip over" from its first position (17A) to its second position (17B) and the flange (23) to be moved automatically into longitudinal alignment with the downwardly directed channel (45) of the pallet (1B). The two pallets can now move into connected or ganged relationship as previously described and shown in Figure 3.

When two pallets (1A and 1B) modified as shown in Figures 7 and 8 are unconnected, the connecting member (17) can be displaced from its second position (17B) to its first position (17A). This displacement can be effected manually as previously described. If required however, the connecting member (17) can be biassed relative to the platform (2), conveniently by a plastic spring part or member (not shown) to be displaced automatically from its second position to its first position as the connecting means (13 and 15) between the two pallets (1A and 1B) move out of engagement with each other. When such a biassed connecting member (17) is provided, the modification shown in Figures 7 and 8 will still be effective as the connecting member will simply be displaced automatically from its first position (17A) to its second position (17B) against the biassing on that member.

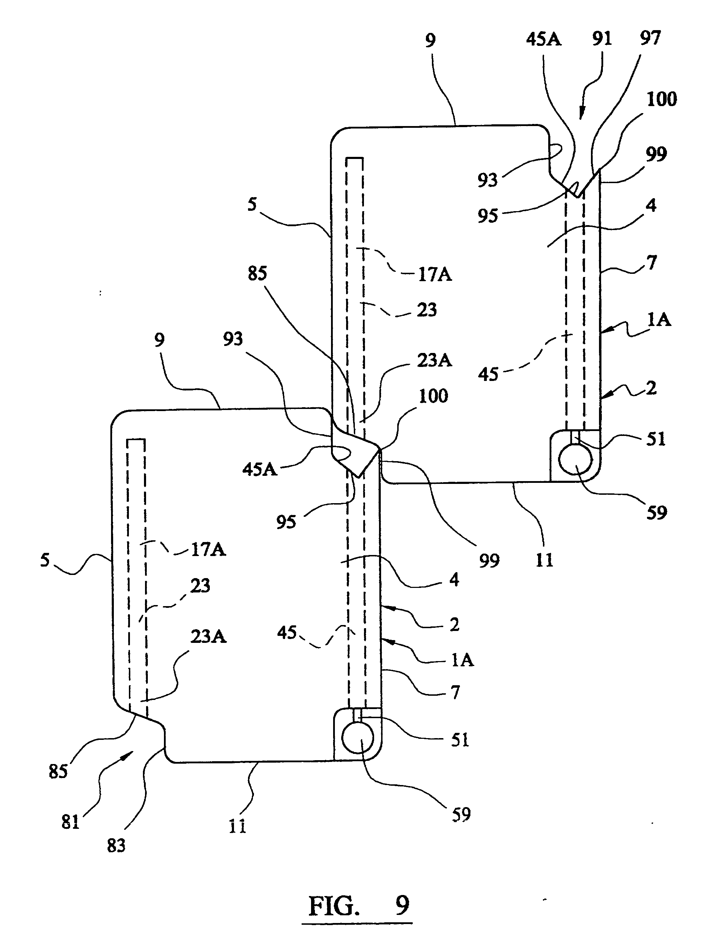

Figure 9 illustrates an alternative technique for connecting together the two pallets (1A) and (1B) having the modifications shown in Figures 7 and 8. In Figure 9, the two pallets are shown in plan and disposed with their side edges parallel and their decks 4 in echelon. The guide face (93) of pallet (1B) is in face-to-face abutment with the side edge face (5) of pallet (1A) so that the apical leading edge (100) of nose (99) on pallet (1B) is located in the rebate (81) of pallet (1A) and in longitudinal alignment with the slight clearance between the flange (23) of the connecting member (17A) of pallet (1A) and the side wall part (29) of that pallet. In this arrangement, lateral clearance may be provided between the nose (99) and side edge face (7) of pallet (1B) and the face (83) in rebate (81) of pallet (1A). The pallet (1B) is now displaced longitudinally relative to pallet (1A) so that the guide face (93) slides over the side edge face (5) as the nose (99) of pallet (1B) engages behind the flange (23) of pallet (1A) (that is between that flange and the wall part 29). With continued longitudinal displacement between the pallets, the ramp (95) of pallet (1B) abuts the ramp (85) of pallet (1A) to provide the previously mentioned cam effect whereby pallet (1B) is subjected to lateral displacement relative to and in a direction outwardly of pallet (1A), causing the nose (99) of pallet (1B) to displace the connecting member (17) of pallet (1A) from its position (17A) towards its position (17B). Eventually the nose (99) of pallet (1B) displaces the connecting member of pallet (1A) to its second position (17B) in longitudinal alignment with the channel (45) of pallet (1B) as the nose (99) and side edge face (7) of pallet 1B move into face-to-face abutment with the side edge face (5) of pallet (1A). In this latter position the two pallets can be displaced longitudinally relative to each other to complete their connection in side-by-side relationship.

## Claims

1. A mobile platform assembly comprising a platform (2) having a deck (4) and ground engaging rollers (3) for mobility; said platform (2) having two longitudinally extending and laterally spaced side edges (5, 7) with two connecting means (13, 15) provided one at each said side edge; a first of said connecting means (15; 13) having downwardly directed flange means with a downwardly open void between said flange means and the platform (2) and a second of said connecting means (13; 15) having upwardly directed flange means with an upwardly open void between said upwardly directed flange means and the platform (2); the first and second connecting means being arranged so that two similar said platform assemblies are connectable together in side-by-side relationship for unified mobility with the flange means of each said connecting means being receivable longitudinally and respectively within the void of the other said connecting means, **characterized in that** one of said connecting means (13) is laterally displaceable relative to the platform (2) between a first position (17A) in which its flange means is accommodated unobtrusively by the platform and a second position (17B) in which its flange means is presented to be connectable to the other one of said connecting means (15) of a second similar mobile platform assembly for the unified mobility.

2. An assembly as claimed in Claim 1 in which the void of the first connecting means is presented by a downwardly open channel at least partly defined by the downwardly directed flange means.

3. An assembly as claimed in either Claim 1 or Claim 2 in which the void of the second connecting means is presented by an upwardly open channel at least partly defined by the upwardly directed flange means.

4. An assembly as claimed in any one of the preceding claims in which a said void is partly defined by the platform.

5. An assembly as claimed in any one of the preceding claims in which one said connecting means is rigid or integral with the platform and the flange means and void of that connecting means are unobtrusively disposed in the respective side edge of the platform.

6. An assembly as claimed in any one of the preceding claims in which the laterally displaceable connecting means comprises a connecting member having the flange means and which member is carried by the platform to be displaceable between said first position and said second position.

7. An assembly as claimed in Claim 6 when appendant to either Claim 2 or Claim 3 in which the channel is formed in the connecting member.

8. An assembly as claimed in either Claim 6 or Claim 7 in which stop means interengaging between the connecting member and the platform is provided to locate the connecting member in its said second position.

9. An assembly as claimed in any one of Claims 6 to 8 in which frictional engagement or resilient interference is provided between the connecting member and the platform to releaseably retain the connecting member in its said first position.

10. An assembly as claimed in any one of Claims 6 to 9 in which the connecting member is hingedly mounted on the platform to be pivotably adjustable between said first position and said second position.

11. An assembly as claimed in Claim 10 in which the connecting member is hingedly mounted in the respective side edge of the platform by a longitudinally extending pivot pin.

12. An assembly as claimed in any one of Claims 6 to 9 in which the connecting member comprises a drawer component which is slidable laterally into and out of the respective side edge of the platform.

13. An assembly as claimed in any one of the preceding claims in which the laterally displaceable connecting means is biassed relative to the platform in a direction from its second position to its first position.

14. An assembly as claimed in Claim 13 in which the biassing is provided by a spring or resilient loading which reacts between the connecting means and the platform.

15. An assembly as claimed in any one of the preceding claims in which the platform has means for displacing the displaceable connecting means from its first position to its second position.

16. An assembly as claimed in Claim 15 in which the displacement means acts automatically to displace said connecting means from its first position to its second position as two similar said assemblies are manoeuvred and displaced relative to each other to be connectable by the interengaging first and second connecting means.

17. An assembly as claimed in Claim 16 in which the displacement means comprises guide surfaces on the platform which are arranged so that as two said assemblies slide longitudinally relative to each other into side-by-side relationship for connection together, said guide surfaces cooperate between the platforms of the two assemblies and with the laterally displaceable connecting means which is to connect between the two platforms to cause the said connecting means to be displaced laterally from its first position to its second position in readiness to connect the two platforms together during continued longitudinal displacement between them.

18. An assembly as claimed in Claim 17 and comprising a first guide surface for engagement with the laterally displaceable connecting means of a second similar assembly when that connecting means is in its first position and during relative longitudinal displacement between the first and second assemblies and further guide surfaces which act as cam surfaces and which cooperate during said relative longitudinal displacement between the first and second assemblies to displace the two assemblies laterally relative to each other, said lateral displacement resulting in the guide surface engaging with the laterally displaceable connecting means displacing that connecting means into its second position.

19. An assembly as claimed in any one of the preceding claims and comprising releasable retaining means carried by the platform and which during said connection of two similar said platform assemblies, cooperates between the assemblies to restrain relative longitudinal displacement between the assemblies as connected together for unified mobility.

## Patentansprüche

1. Bewegliche Plattform-Baueinheit, die eine Plattform (2) mit Deck (4) sowie Laufrollen (3) mit Bodenkontakt zum Bewegen aufweist, wobei die Plattform (2) zwei in Längsrichtung verlaufende und quer beabstandete Seitenränder (5,7) hat, die zwei Verbindungsmittel (13,15) aufweisen, je ein Verbindungsmittel an den beiden Seitenrändern; ein erstes der Verbindungsmittel (15,13) hat ein nach unten gerichtetes Flanschmittel mit einem nach unten offenen Hohlraum zwischen Flanschmittel und der Plattform (2), ein zweites der Verbindungsmittel (13,15) hat ein nach oben gerichtetes Flanschmittel mit einem nach oben offenen Hohlraum zwischen dem nach oben gerichteten Flanschmittel und der Plattform (2); das erste und das zweite Verbindungsmittel sind so angeordnet, dass zwei ähnliche Plattform-Baueinheiten zwecks gemeinsamer Beweglichkeit Seite an Seite miteinander verbunden werden können, wobei das Flanschmittel eines jeden der Verbindungsmittel in Längsrichtung vom Hohlraum des jeweils anderen Verbindungsmittels aufgenommen werden kann, was **dadurch gekennzeichnet ist, dass** eines der Verbindungsmittel (13) seitlich relativ zur Plattform (2) zwischen zwei Positionen bewegt werden kann, einer ersten Position (17A), in der sein Flanschmittel von der Plattform aufgenommen wird, ohne herauszuragen, und einer zweiten Position (17B), in der sein Flanschmittel so positioniert ist, dass es mit dem anderen der Verbindungsmittel (15) einer zweiten ähnlichen beweglichen Plattform-Baueinheit zur gemeinsamen Bewegung der beiden Baueinheiten verbunden werden kann.

2. Baueinheit nach Anspruch 1, in der der Hohlraum des ersten Verbindungsmittels einen nach unten offenen Kanal bildet, der mindestens teilweise durch das nach unten gerichtete Flanschmittel definiert ist.

3. Baueinheit nach Anspruch 1 oder 2, in der der Hohlraum des zweiten Verbindungsmittels einen nach oben offenen Kanal bildet, der mindestens teilweise durch das nach oben gerichtete Flanschmittel definiert ist.

4. Baueinheit nach einem der vorhergehenden Ansprüche, in der ein Hohlraum teilweise durch die Plattform definiert wird.

5. Baueinheit nach einem der vorhergehenden Ansprüche, in der eines der Verbindungsmittel starr oder in die Plattform integriert ist, wobei Flanschmittel und Hohlraum dieses Verbindungsmittels im jeweiligen Seitenrand der Plattform untergebracht sind, ohne herauszuragen.

6. Baueinheit nach einem der vorhergehenden Ansprüche, in der das seitlich bewegliche Verbindungsmittel ein Verbindungsteil mit Flanschmittel aufweist, wobei das Teil von der Plattform so getragen wird, dass es zwischen der ersten und zweiten Position bewegt werden kann.

7. Baueinheit nach Anspruch 6, wenn mit Anspruch 2 oder 3 verbunden, in der der Kanal im Verbindungsteil angelegt ist.

8. Baueinheit nach Anspruch 6 oder 7, die ein Stoppmittel aufweist, das zwischen Verbindungsteil und Plattform eingreift, um das Verbindungsteil in seiner zweiten Position zu platzieren.

9. Baueinheit nach einem der Ansprüche 6 bis 8, die zwischen dem Verbindungsteil und der Plattform Reibungseingriff oder elastische Behinderung aufweist, damit das Verbindungsteil lösbar in seiner ersten Position gehalten wird.

10. Baueinheit nach einem der Ansprüche 6 bis 9, in der das Verbindungsteil schwenkbar auf die Plattform montiert ist, damit es zwischen der ersten und zweiten Position drehbar ist.

11. Baueinheit nach Anspruch 10, in der das Verbindungsteil durch einen in Längsrichtung verlaufenden Drehzapfen schwenkbar am jeweiligen Seitenrand der Plattform montiert ist.

12. Baueinheit nach einem der Ansprüche 6 bis 9, in der das Verbindungsteil ein Einschubelement aufweist, das in den und aus dem jeweiligen Seitenrand der Plattform seitlich verschiebbar ist.

13. Baueinheit nach einem der vorhergehenden Ansprüche, in der das seitlich bewegliche Verbindungsteil in einer Richtung von seiner zweiten zu seiner ersten Position relativ zur Plattform vorgespannt ist.

14. Baueinheit nach Anspruch 13, in der die Vorspannung durch eine Feder oder elastische Belastung geleistet wird, die zwischen Verbindungsteil und Plattform reagiert.

15. Baueinheit nach einem der vorhergehenden Ansprüche, in der die Plattform Mittel aufweist, wodurch das verschiebbare Verbindungsteil aus seiner ersten in seine zweite Position verschoben werden kann.

16. Baueinheit nach Anspruch 15, in der das Verschiebungsmittel automatisch in Aktion tritt, um das Verbindungsteil aus der ersten Position in seine zweite Position zu verschieben, wenn zwei ähnliche Baueinheiten manövriert und relativ zueinander so positioniert werden, dass sie durch ineinandergreifende erste und zweite Verbindungsmittel verbunden werden können.

17. Baueinheit nach Anspruch 16, in der das Verschiebungsmittel aus Führungsflächen an der Plattform besteht, die so angeordnet sind, dass, wenn zwei Baueinheiten relativ zueinander longitudinal in eine zur Verbindung geeignete, nebeneinander gelagerte Position gleiten, die Führungsflächen zwischen den Plattformen der beiden Baueinheiten mit dem seitlich verschiebbaren Verbindungsmittel, das zwischen den beiden Plattformen eine Verbindung herstellen soll, gemeinsam darauf hinwirken, das Verbindungsmittel seitlich aus seiner ersten in seine zweite Position zu schieben, sodass es bereitsteht, um die beiden Plattformen im Verlauf der fortgesetzten relativen Longitudinalverschiebung zu verbinden.

18. Baueinheit nach Anspruch 17, mit einer ersten Führungsfläche zum Einrücken auf das seitlich verschiebbare Verbindungsmittel einer zweiten ähnlichen Baueinheit, wenn dieses Verbindungsmittel seine erste Position einnimmt und im Verlauf der relativen Longitudinalverschiebung zwischen den ersten und zweiten Baueinheiten, sowie weiteren Führungsflächen, die als Nockenflächen dienen und während der relativen Longitudinalverschiebung zwischen der ersten und zweiten Baueinheit gemeinsam bewirken, dass die beiden Baueinheiten relativ zueinander seitlich verschoben werden, wobei die seitliche Verschiebung dazu führt, dass die Führungsfläche auf das seitlich verschiebbare Verbindungsmittel einrückt und dieses Verbindungsmittel in seine zweite Position verschiebt.

19. Baueinheit nach einem der vorhergehenden Ansprüche, mit einem lösbaren Sperrmittel, das von der Plattform getragen wird und bei der Verbindung von zwei ähnlichen Plattform-Baueinheiten zwischen den Baueinheiten bewirkt, dass die relative Longitudinalverschiebung zwischen den Baueinheiten verhindert wird, wenn die Baueinheiten zur gemeinsamen Bewegung verbunden sind.

## Revendications

1. Assemblage de plate-forme mobile comprenant une plate-forme (2), ayant un plateau (4) et des rouleaux en prise avec le sol (3), en vue de la mobilité ; ladite plate-forme (2) ayant deux bords latéraux (5, 7) se prolongeant longitudinalement et espacés latéralement, avec deux moyens de connexion (13, 15), l'un d'entre eux étant prévus sur chaque dit bord latéral ; un premier desdits moyens de connexion (15, 13), ayant des moyens de flasque dirigés vers le bas avec un vide ouvert vers le bas entre ledit moyen de flasque et la plate-forme (2) et un deuxième dudit moyen de connexion (13, 15), ayant un moyen de flasque dirigé vers le haut avec un vide ouvert vers le haut entre ledit moyen de flasque dirigé vers le haut et la plate-forme (2) ; le premier et le deuxième moyens de connexion étant arrangés de telle manière que deux assemblages similaires de ladite plate-forme peuvent être connectés ensemble dans une relation en côte à côte, en vue d'une mobilité unifiée avec le moyen de flasque de chacun desdits moyens de connexion pouvant être reçus longitudinalement et respectivement au sein du vide de l'autre dit moyen de connexion, **caractérisé en ce que** l'un desdits moyens de connexion (13) peut être déplacé latéralement par rapport à la plate-forme (2) entre une première position (17A), dans laquelle son moyen de flasque est accommodé de manière non importune par la plate-forme et une deuxième position (17B), dans laquelle son moyen de flasque est présenté pour pouvoir être connecté à l'autre desdits moyens de connexion (15) d'un deuxième assemblage de plate-forme mobile similaire, en vue de la mobilité unifiée.

2. Assemblage selon la revendication 1, dans laquelle le vide du premier moyen de connexion est présenté par un canal ouvert vers le bas au moins partiellement défini par le moyen de flasque dirigé vers le bas.

3. Assemblage selon la revendication 1 ou la revendication 2, dans lequel le vide du deuxième moyen de connexion est présenté par un canal ouvert vers le haut, au moins partiellement défini par le moyen de flasque dirigé vers le haut.

4. Assemblage selon l'une quelconque des revendications précédentes, dans lequel un dit vide est partiellement défini par la plate-forme.

5. Assemblage selon l'une quelconque des revendications précédentes, dans lequel un desdits moyens de connexion est rigide ou intégré à la plate-forme et dans lequel le moyen de flasque et le vide de ce moyen de connexion sont disposés d'une manière non importune dans le bord latéral respectif de la plate-forme.

6. Assemblage selon l'une quelconque des revendications précédentes, dans lequel le moyen de connexion déplaçable latéralement comprend un organe de connexion ayant le moyen de flasque et dans lequel ledit organe est porté par la plate-forme pour pouvoir être déplacé entre ladite première position et ladite deuxième position.

7. Assemblage selon la revendication 6, en appendice soit à la revendication 2, soit à la revendication 3, dans lequel le canal est formé dans l'organe de connexion.

8. Assemblage selon soit la revendication 6, soit la revendication 7, dans lequel un moyen d'arrêt s'engageant entre l'organe de connexion et la plate-forme est prévu pour localiser l'organe de connexion dans sa dite deuxième position.

9. Assemblage selon l'une quelconque des revendications 6 à 8, dans lequel un engagement à friction ou une interférence du type élastique est prévu entre l'organe de connexion et la plate-forme pour retenir de manière amovible l'organe de connexion dans sa dite première position.

10. Assemblage selon l'une quelconque des revendications 6 à 9, dans lequel l'organe de connexion est monté à l'aide de charnières sur la plate-forme pour pouvoir être ajusté de manière rotative entre ladite première position et ladite deuxième position.

11. Assemblage selon la revendication 10, dans lequel l'organe de connexion est monté à l'aide de charnières dans le bord latéral respectif de la plate-forme par un axe de pivotement se prolongeant longitudinalement.

12. Assemblage selon l'une quelconque des revendications 6 à 9, dans lequel l'organe de connexion comprend un composant à tiroir qui peut coulisser latéralement dans et hors du bord latéral respectif de la plate-forme.

13. Assemblage selon l'une quelconque des revendications précédentes, dans lequel le moyen de connexion déplaçable latéralement est polarisé par rapport à la plate-forme dans une direction de sa deuxième position à sa première position.

14. Assemblage selon la revendication 13, dans lequel la polarisation est fournie par un ressort ou par un chargement élastique qui réagit entre le moyen de connexion et la plate-forme.

15. Assemblage selon l'une quelconque des revendications précédentes, dans lequel la plate-forme a des moyens en vue du déplacement du moyen de connexion déplaçable de sa première position à sa deuxième position.

16. Assemblage selon la revendication 15, dans laquelle le moyen de déplacement agit d'une manière automatique pour déplacer ledit moyen de connexion de sa première position à sa deuxième position, alors que deux dits assemblages similaires sont manoeuvrés et déplacés l'un par rapport à l'autre pour pouvoir être connectés par le premier et deuxième moyens de connexion en engagement réciproque.

17. Assemblage selon la revendication 16, dans lequel le moyen de déplacement comprend des surfaces de guidage sur la plate-forme, qui sont arrangées de telle sorte que, comme lesdits deux assemblages coulissent longitudinalement l'un par rapport à l'autre dans une relation en côte à côte en vue d'une connexion ensemble, lesdites surfaces de guidage coopèrent entre les plate-formes des deux assemblages et avec le moyen de connexion déplaçable latéralement qui est destiné à connecter entre les deux plate-formes pour provoquer le déplacement latéral dudit moyen de connexion de sa première position à sa deuxième position dans l'attente d'une connexion des deux plate-formes ensemble pendant le déplacement longitudinal continu entre eux.

18. Assemblage selon la revendication 17 et comprenant une première surface de guidage pour un engagement au moyen de connexion déplaçable latéralement d'un deuxième assemblage similaire, lorsque ce moyen de connexion est dans sa première position et pendant le déplacement longitudinal relatif entre le premier et le deuxième assemblages et en outre des surfaces de guidage qui agissent en tant que surfaces de came et qui coopèrent pendant ledit déplacement longitudinal relatif entre le premier et le deuxième assemblages pour déplacer les deux assemblages latéralement l'un par rapport à l'autre, ledit déplacement latéral résultant dans la surface de guidage, s'engageant avec le moyen de connexion déplaçable latéralement, déplaçant ce moyen de connexion dans sa deuxième position.

19. Assemblage selon l'une quelconque des revendications précédentes et comprenant des moyens de retenue libérables supportés par la plate-forme et qui, pendant ladite connexion desdits deux assemblages de plate-forme similaires, coopèrent entre les assemblages pour restreindre le déplacement longitudinal relatif entre les assemblages, tels qu'ils sont connectés ensemble en vue d'une mobilité unifiée.
